# EUROPEAN PATENT SPECIFICATION

(11) **EP 3 050 359 B1**
(45) Date of publication and mention of the grant of the patent: **01.05.2019**
(21) Application number: 14787268.3
(22) Date of filing: 26.08.2014
(51) Int. Cl.: H04W 36/26, H04W 36/30, H04W 36/00, H04W 36/38

(54) **CONTROLLING HANDOVER OF A HIGH-PRIORITY USER EQUIPMENT OPERATING NEAR A CELL EDGE**
STEUERUNG DES HANDOVERS EINES BENUTZERGERÄTS MIT HOHER PRIORITÄT MIT BETRIEB IN DER NÄHE EINES ZELLENRANDES
COMMANDE DE TRANSFERT D'UN ÉQUIPEMENT D'UTILISATEUR À HAUTE PRIORITÉ FONCTIONNANT À PROXIMITÉ DE LA BORDURE D'UNE CELLULE

(30) Priority: 26.09.2013 US 201314037911
(43) Date of publication of application: 03.08.2016
(73) Proprietor: Telefonaktiebolaget LM Ericsson (publ), 164 83 Stockholm (SE)
(72) Inventor: BAWASKAR, Namita, Woodinville, Washington 98072 (US)
(74) Representative: Ericsson
(86) International application number: PCT/IB2014/064076
(87) International publication number: WO 2015/044806

(56) References cited:
- EP-A1- 1 401 230
- WO-A1-01/89255
- GB-A- 2 484 534
- US-A1- 2011 312 369
- US-A1- 2013 065 632

## Description

### TECHNICAL FIELD

The present invention relates to a method and an apparatus in an eNodeB (eNB) for controlling handover of a User Equipment (UE) operating near a cell edge.

### BACKGROUND

In the Long Term Evolution (LTE) radio access network, UEs send Channel Quality Indication (CQI) reports to their serving eNB to help the eNB determine the physical radio environment, or channel quality, being experienced by each UE and to decide which Modulation and Coding scheme to use. During each Transmission Time Interval (TTI), an eNB scheduler considers the physical radio environment of each UE, prioritizes the Quality of Service (QoS) service requirements among the UEs, allocates radio resources, and informs the UEs of the allocated radio resources. The solution relies on rapid adaptation to channel variations, employing Hybrid Automatic Repeat Request (HARQ) with soft-combining and rate adaptation.

The eNB scheduler assigns each radio bearer a certain priority based on an assigned QoS Class Identifier (QCI) of the UE. The operator assigns the QCI to the UE based on the UE type and the type of service requested by the UE. UEs requesting services such as voice calls are assigned a QCI indicating a higher QoS, and the scheduler is required to allocate sufficient resource blocks to the UE to meet the bitrate requirements needed to provide the higher QoS. When prioritizing the QoS service requirements among the UEs, the scheduler supports both delay-sensitive real-time services as well as datacom services requiring high peak data rates. The eNB schedules the UEs both on the downlink (DL) and on the uplink (UL). Since the scheduler schedules DL and UL packets to all UEs in the eNB coverage area, the scheduler has to treat every UE based on its assigned QCI and its reported signal quality. A higher scheduling priority gives the radio bearer serving the UE a higher probability of obtaining the resources necessary to enable the UE to perform transmission or reception at the indicated QoS level.

Several trigger events are currently defined in LTE based on the UE measurements of the signal quality from the serving cell and neighbor cells. The trigger events relevant to the present disclosure are referred to as a2, a4, and a5. At a2, the signal quality of the serving cell becomes worse than an absolute threshold. At this point, the UE begins to allocate more resources to listening to the serving eNB and to determining which neighboring cells are the best candidates for handover. Thus, in effect, a2 defines a beginning of the cell edge zone. At a4, the Reference Signal Receive Power (RSRP) of a neighbor cell becomes better than or equal to the RSRP of the serving cell. At a5, the RSRP of the neighbor cell becomes better than a threshold T1, while the RSRP of the serving cell is worse than a threshold T2. Thresholds T1 and T2 relate to hysteresis values added and subtracted to a defined handover threshold level in order to prevent premature handover and "Ping-Pong" effects. Thus, in effect, a5 defines the end of the cell edge zone and the boundary of the cell. When the UE's reported CQI (UEcqi) drops to a5, the UE is handed over to the neighbor cell.

High-priority subscribers (either with a defined Guaranteed Bit Rate (GBR) or not), who are at the cell edge (i.e., event a4 has been is triggered but not event a5) suffer because of the low Signal-to-Noise Ratio (SNR) and high interference at the cell edge due to poor RSRP. However, due to the high scheduling priority set for such subscribers, the eNB continues to allocate resources and transmit messages and data to the UE despite the poor RSRP. If the UE does not receive the data or messages at the bitrate required for its assigned QCI, it will signal the serving eNB, which will assign additional resources to the UE. If the UE is unable to decode the messages, it will not respond, and after a timeout period, the serving eNB will retransmit the data that was not acknowledged. This wastes network resources and also deteriorates the user experience in case of data or voice calls.

GB2484534 discloses a cell edge hole detection method in which handover point for UEs depends on parameter settings and measurement values. US2011/0312369 discloses a system for estimating a moving direction of a radio terminal in which handover of a radio terminal is based on the estimated moving direction and priority information. US2013/0065632 discloses that handover thresholds may be set based on an application being executing by a mobile device.

### SUMMARY

With the existing implementation, even if a high-priority UE has poor signal quality, the eNB scheduler must allocate to the high-priority UE, radio resources consistent with the QoS requirements of the UE's assigned QCI. This causes several problems.

First, the signaling load on the eNB and the UE is increased because of retransmissions. When the UE receives a TB that it is unable to decode, the UE signals this decoding failure to the eNB. In response, the eNB retransmits the TB. Additionally, if the signal quality is so bad that the UE does not receive the TB at all, the UE will not send an acknowledgment. Failure to receive an acknowledgment within a specified time period also causes the eNB to retransmit the TB. The excess use of radio resources caused by these retransmissions causes a second problem, namely, that it may leave insufficient resources to serve other UEs with lower priority. The present disclosure solves this problem of "UE starvation" as well as the increased signaling load on the eNB due to the retransmissions.

The present disclosure recognizes that under the existing implementation, high-priority subscribers at cell edge suffer poor service irrespective of their QOS priority because the handover decision is not considering their QCI. Currently, the handover decision only takes into consideration the a2, a4, and a5 thresholds.

The invention is set out in the appended claims. The embodiments and/or examples of the following description, which are not covered by the appended claims, may be considered outside the scope of the present invention.

According to different embodiments of the present disclosure, methods and apparatuses are provided for enabling the eNB to instruct the high-QCI/Priority UE, which is experiencing low signal quality and high retransmissions at the cell edge, to move earlier than normal to an adjacent cell with better signal quality in order to save the scheduler bandwidth and also to provide relief to the UE from retransmissions and hence gain a better user experience.

Further features and benefits of embodiments of the disclosure will become apparent from the detailed description below.

### BRIEF DESCRIPTION OF THE DRAWINGS

In the following section, the disclosure will be described with reference to exemplary embodiments illustrated in the figures, in which:
FIG. 1 is an illustrative drawing of two neighboring cells in a cellular radio network in which a high-priority UE is operating near a cell edge;
FIG. 2 is a flow chart illustrating the steps of an exemplary embodiment of a method according to the present disclosure; and
FIG. 3 is a simplified block diagram of an exemplary embodiment of an apparatus according to the present disclosure.

### DETAILED DESCRIPTION

The present disclosure will now be described more fully hereinafter with reference to the accompanying drawings, in which preferred embodiments are shown. The disclosed solution may, however, be embodied in many different forms and should not be construed as limited to the embodiments set forth herein; rather, these embodiments are provided so that this disclosure will be thorough and complete, and will fully convey the scope of the solution to those skilled in the art. In the drawings, like reference signs refer to like elements. Additionally, it should be understood that the disclosed solution can be implemented in hardware or a combination of hardware and software such as a general-purpose computer or microprocessor, which executes software stored on a non-transitory memory.

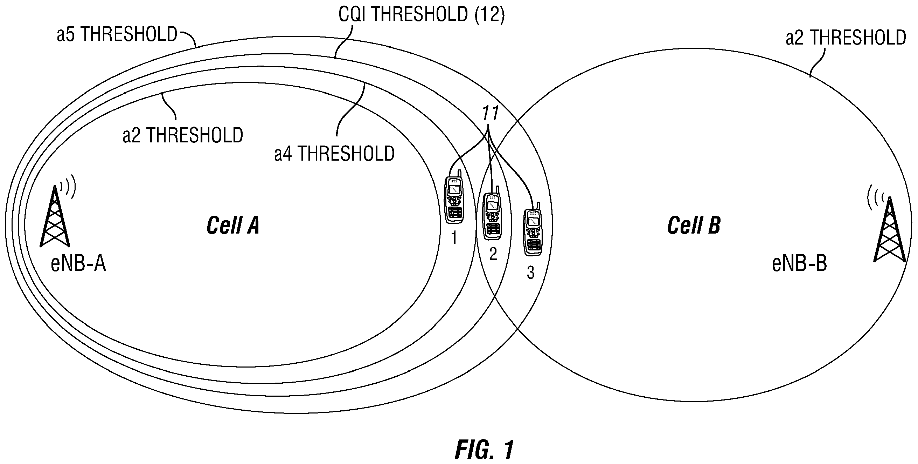

FIG. 1 is an illustrative drawing of two neighboring cells, Cell-A and Cell-B, in a cellular radio network in which a high-priority UE 11 is operating near a cell edge of its serving cell, Cell-A. For simplicity, only the a2 threshold is shown for Cell-B although additional threshold levels may be defined for Cell-B.

The UE is illustrated in three different positions (positions 1-3) with respect to the various thresholds (a2-a5) defining an edge zone of Cell-A. In position-1, the UE is operating where its reported CQI is lower than the a2 threshold and greater than the a4 threshold, where the RSRP of Cell-B becomes better than or equal to the RSRP of Cell-A. In position-2, the UE is operating where its reported CQI is lower than the a4 threshold and greater than a newly defined threshold referred to herein as the CQI Threshold 12. The CQI Threshold 12 is a configurable threshold set at a level between the a4 threshold and the a5 threshold.

In position-3, the UE is operating where its reported CQI is lower than the CQI Threshold 12 and greater than the a5 threshold. Thus, in position-3, the UE's signal quality may be quite poor, but it has not yet reached the a5 threshold where the UE would normally be handed over to Cell-B.

The present disclosure enables the operator to define the cell edge based on a new configurable signal-quality threshold defined to force an early handover for UEs having identified QoS or QCI priority levels. In one embodiment, the various a1-a5 thresholds and the new configurable signal-quality threshold may be defined in terms of CQI. Thus, the new configurable signal-quality threshold is a CQI Threshold parameter. In other embodiments, the a1-a5 thresholds and the new configurable signal-quality threshold may be defined in terms of other signal-quality measurements such as RSRP, Reference Signal Receive Quality (RSRQ), SNR, Signal-to-Noise-plus-Interference Ratio (SINR), and the like. The following description uses terminology consistent with thresholds defined in terms of CQI, although the disclosed solution is not limited to this implementation.

The disclosed solution provides the operator with the ability to define which QCI range will be subject to the CQI Threshold parameter, and which QCI range will not. In addition, for each QCI level defined as being subject to the CQI Threshold parameter, the operator is able to define a different CQI Threshold parameter, if desired. For example, in LTE, there are nine QCI levels, numbered 1 through 9, with levels 1-4 for GBR UEs and levels 5-9 for non-GBR UEs. The operator may determine, for example, that QCI levels 1-4 shall be subject to a CQI Threshold parameter for handover that is lower than the a4 threshold and greater than the standard a5 handover threshold. Additionally, the operator may define a different CQI Threshold parameter for the GBR UEs (QCI levels 1-4) than the CQI Threshold parameter defined for the non-GBR UEs (QCI levels 5-9).

By defining the CQI Threshold parameter at a level that is lower than a4 and greater than a5, the operator causes the eNB to force the handover of a high-priority UE at a higher CQI threshold than a lower priority UE (which is handed over at a5). By forcing the handover of the high-priority UEs at a higher CQI threshold, the retransmission load on the eNB is reduced, the high-priority UEs are more quickly moved to adjacent cells with better RSRP thus improving their reception, and resources that were previously used for retransmissions are made available to lower priority UEs, thus reducing the "starvation" effect.

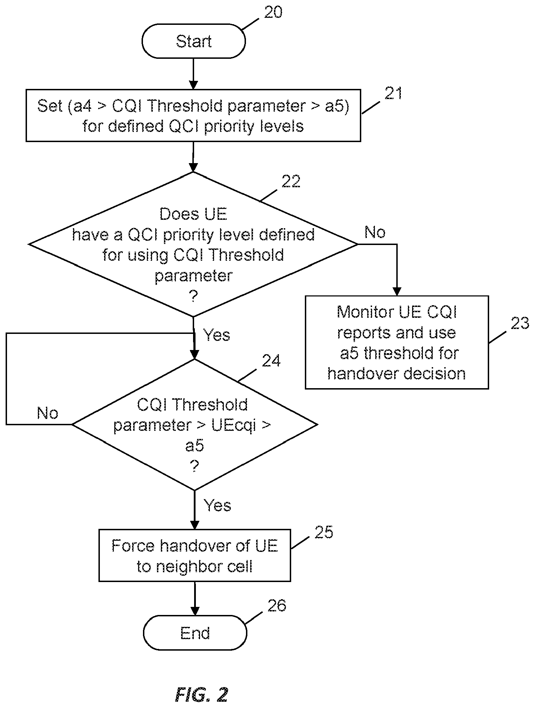

FIG. 2 is a flow chart illustrating the steps of an exemplary embodiment of a method according to the present disclosure. The method starts at step 20 and moves to step 21 where the CQI Threshold parameter 12 is set at a level lower than the a4 threshold and greater than the a5 threshold for defined QCI priority levels. At step 22, the eNB determines whether the UE has an assigned QCI priority level that is defined for utilizing the CQI Threshold parameter (i.e., the UE is a high-priority UE). If not, the UE is a lower priority UE, and the method moves to step 23 where the a5 threshold is used for a normal handover decision. However, if the eNB determines that the UE has an assigned QCI level that is defined for utilizing the CQI Threshold parameter, the method moves to step 24 where the eNB determines whether the UE's reported CQI (UEcqi) is lower than the CQI Threshold parameter and greater than the a5 threshold. If not, the UE is still operating with a CQI greater than the CQI Threshold parameter, so no action is taken. The method returns to step 24 where the eNB continues to monitor the UEcqi to determine whether it crosses the CQI Threshold parameter.

When the eNB determines that the UEcqi is lower than the CQI Threshold parameter and greater than the a5 threshold, the method moves to step 25. At this point, the UE has better signal quality from Cell-B than from Cell-A, but the signal quality from Cell-A has not yet deteriorated to the a5 threshold. Since the UE is a high-priority UE, the eNB forces a handover of the UE to Cell-B. The method then ends at 26.

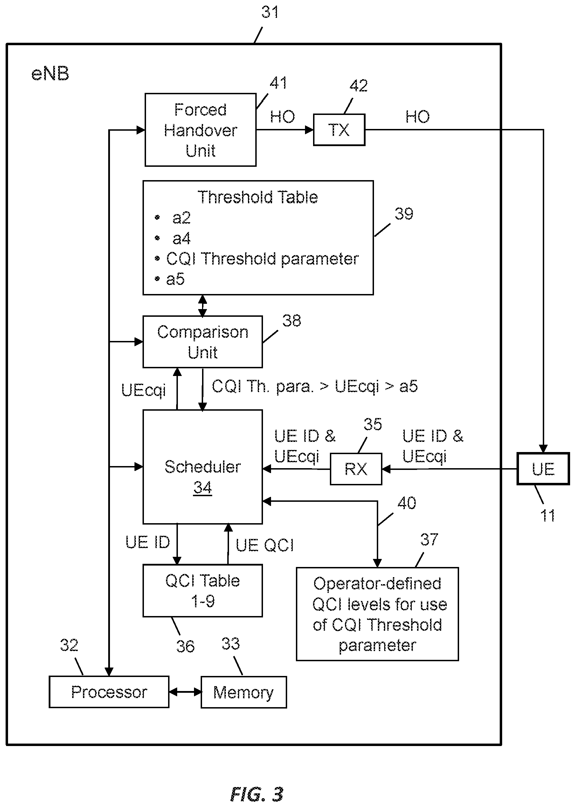

FIG. 3 is a simplified block diagram of an exemplary embodiment of an apparatus implemented in an eNB 31 according to the present disclosure. Operation of the eNB may be controlled, for example, by a processor 32 executing computer program instructions stored in a memory 33. A scheduler 34 controls the allocation of network resources to UEs such as UE 11 using inputs from several sources internal and external to the eNB. A receiver 35 receives CQI reports from the UE including a UE identifier and the reported UEcqi. The receiver provides this information directly or indirectly to the scheduler.

The scheduler 34 may also obtain the QCI level of the UE by accessing a QCI table 36, for example, utilizing the UE identifier. An interface 40 to an operator system provides the scheduler with operator-defined QCI levels 37 that are identified for utilizing the new CQI Threshold parameter.

The scheduler 34 may also include or have access to a comparison unit 38, which compares the reported UEcqi with the different a2-a5 thresholds. The comparison unit may obtain the threshold values, for example, from a table of configurable thresholds 39 stored in memory 33 or another source indicating these operator-defined threshold levels. Upon comparing the UEcqi with the various thresholds, the comparison unit may determine that the UEcqi is lower than the CQI Threshold parameter 12 and greater than the a5 threshold. When this condition is met, the scheduler 34 may directly, or through the processor 32, instruct a forced handover unit 41 to initiate handover of the UE 11 to Cell-B. A transmitter 42 may transmit a handover (HO) command to the UE.

It is to be understood that the present disclosure addresses only those procedures in the eNB directed toward determining when a handover is to be initiated and then initiating the handover. Details of the handover procedure itself are not disclosed, but are known to those of ordinary skill in the art. For example, it is known that in LTE, the serving (source) eNB also prepares the target eNB for handover concurrently with the handover decision (i.e., the UE's context is made available and resources are reserved in the target cell when the UE accesses the target eNB). Otherwise, the UE would transition to idle-state and attempt to complete the handover by transitioning back to connected-state. These procedures are outside the scope of the present disclosure.

Thus, according to different aspects of the present disclosure, embodiments of methods and apparatuses are provided for enabling the eNB to instruct high-QCI/Priority UEs which are experiencing low quality and high retransmissions at the cell edge to move to an adjacent cell with better RSRP in order to save the scheduler bandwidth and also to provide relief to the UEs from retransmissions and hence gain a better user experience.

In the drawings and specification, there have been disclosed typical preferred embodiments of the disclosed solution and, although specific terms are employed, they are used in a generic and descriptive sense only and not for purposes of limitation. The scope of the present invention is set forth in the following claims.

## Claims

1. A method executed by an eNodeB (31) of a cellular telecommunication system for controlling handover of a User Equipment, UE, (11) operating near a cell edge of a serving cell, the method being **characterised by** comprising:
determining (22) whether the UE has a priority level defined for utilizing a signal-quality threshold parameter (12) that is set at a level greater than a signal-quality handover level,a5, used to initiate handover of the UE to a neighbor cell;
upon determining that the UE has a priority level defined for utilizing the signal-quality threshold parameter (12), monitoring (24) UE signal-quality reports to determine when a signal quality of the UE in the serving cell is lower than the signal-quality threshold parameter and greater than the signal-quality handover level; and
forcing (25) a handover of the UE from the serving cell to the neighbor cell in response to determining that the signal quality of the UE is lower than the signal-quality threshold parameter (12) and greater than the signal-quality handover level a5, wherein the UE signal-quality reports comprise UE Channel Quality Indication, CQI, reports indicating a CQI experienced by the UE, UEcqi, in the serving cell, the signal-quality threshold parameter (12) comprises a CQI Threshold parameter, and the signal-quality handover level comprises a CQI handover level; and
upon determining that the UE does not have a priority level defined for utilizing the CQI Threshold parameter:
monitoring (23) UE CQI reports to determine when the UEcqi is lower than the CQI handover level; and
handing over (23) the UE to the neighbor cell in response to determining that the UEcqi is lower than the CQI handover level.

2. The method according to claim 1, wherein the signal-quality threshold parameter (12) is defined in terms of one of the following, and the UE signal-quality reports indicate a corresponding one of the following experienced by the UE in the serving cell:
Reference Signal Receive Power, RSRP;
Reference Signal Receive Quality, RSRQ;
Signal-to-Noise Ratio, SNR; and
Signal-to-Noise-plus-Interference Ratio, SINR.

3. The method according to claim 1, wherein monitoring the UE CQI reports also includes monitoring the UE CQI reports to determine whether a UEcqi for the neighbor cell exceeds an absolute threshold, wherein the eNodeB forces the handover only when:
the UEcqi for the serving cell is lower than the CQI Threshold parameter;
the UEcqi for the serving cell is higher than the CQI handover level; and
the UEcqi for the serving cell is below the absolute threshold and the UEcqi for the neighbor cell exceeds the absolute threshold.

4. The method according to claim 1, further comprising receiving from an operator system, information indicating one or more priority levels defined for utilizing the CQI Threshold parameter, and indicating a value of the CQI Threshold parameter for each defined priority level..

5. The method of claim 1, wherein the cellular telecommunication system comprises a Long Term Evolution, LTE, access network, and the serving cell and the neighbor cell are either Inter-frequency LTE neighbor cells or Intra-frequency LTE neighbor cells.

6. An eNodeB (31) of a cellular telecommunication system configured for controlling handover of a User Equipment, UE, (11) operating near a cell edge of a serving cell, wherein the eNodeB is **characterised by** a processor (32) coupled to a memory (33) that stores computer program instructions, wherein when the processor executes the computer program instructions, the processor causes the eNodeB to:
determine (22) whether the UE has a priority level defined for utilizing a signal-quality threshold parameter (12) that is set at a level greater than a signal-quality handover level, a5 used to initiate handover of the UE to a neighbor cell;
in response to determining that the UE has a priority level defined for utilizing the signal-quality threshold parameter, monitor (24, 38) UE signal-quality reports to determine when a signal quality of the UE in the serving cell is lower than the signal-quality threshold parameter and greater than the signal-quality handover level; and
force (25, 41) a handover of the UE from the serving cell to the neighbor cell in response to determining that the signal quality of the UE is lower than the signal-quality threshold parameter (12) and greater than the signal-quality handover level a5, wherein the UE signal-quality reports comprise UE Channel Quality Indication, CQI, reports indicating a CQI experienced by the UE, UEcqi, in the serving cell, the signal-quality threshold parameter comprises a CQI Threshold parameter, and the signal-quality handover level comprises a CQI handover level,
wherein the eNodeB is further configured, responsive to determining that the UE does not have a priority level defined for utilizing the CQI Threshold parameter, to monitor UE CQI reports to determine when the UEcqi is lower than the CQI handover level;
wherein the eNodeB is further configured to hand over the UE that does not have a priority level defined for utilizing the CQI Threshold parameter in response to determining that the UEcqi is lower than the CQI handover level.

7. The eNodeB according to claim 6, wherein the signal-quality threshold parameter (12) is defined in terms of one of the following, and the UE signal-quality reports indicate a corresponding one of the following experienced by the UE in the serving cell:
Reference Signal Receive Power, RSRP;
Reference Signal Receive Quality, RSRQ;
Signal-to-Noise Ratio, SNR; and
Signal-to-Noise-plus-Interference Ratio, SINR.

8. The eNodeB of claim 6, wherein the eNodeB is further configured to monitor the UE CQI reports to determine whether a UEcqi for the neighbor cell exceeds an absolute threshold, wherein the eNodeB forces the handover only when:
the UEcqi for the serving cell is lower than the CQI Threshold parameter;
the UEcqi for the serving cell is higher than the CQI handover level; and
the UEcqi for the serving cell is below the absolute threshold and the UEcqi for the neighbor cell exceeds the absolute threshold.

9. The eNodeB according to claim 6, further comprising an interface (37) configured to receive from an operator system, information indicating one or more priority levels defined for utilizing the CQI Threshold parameter, and indicating a value of the CQI Threshold parameter for each defined priority level.

10. The eNodeB according to claim 9, wherein the priority levels are Quality of Service, QoS, Class Identifier, QCI, levels assigned to UEs operating in the cellular telecommunication system.

11. The eNodeB according to claim 6, or any of claims 8 to 10, wherein the memory is configured to store a Channel Quality Indication, CQI, threshold table (39) that indicates a CQI handover level, a5 used to initiate handover of the UE to a neighbor cell, and a CQI Threshold parameter (12) having a level greater than the CQI handover level; and wherein the eNodeB further comprises:
a radio receiver (35) configured to receive from the UE (11), CQI reports reporting a CQI of the UE, UEcqi, in the serving cell; and
a scheduler (34) having an interface to an operator system, wherein the scheduler (34) is configured to, under the control of the processor (32):
receive information (37) from the operator system indicating that the Quality of Service, QoS, Class Identifier, QCI, level of the UE is defined to utilize the CQI Threshold parameter;
instruct a comparison unit (38) to compare the UEcqi with the thresholds stored in the threshold table (39) to determine when the UEcqi is lower than the CQI Threshold parameter (12) and greater than the CQI handover level a5; and
instruct a forced handover unit (41) to force a handover of the UE to the neighbor cell in response to a determination by the comparison unit (38) that the UEcqi is lower than the CQI Threshold parameter (12) and greater than the CQI handover level a5.

## Patentansprüche

1. Verfahren, das von einem eNodeB (31) eines zellularen Telekommunikationssystem zum Steuern einer Übergabe eines Benutzergeräts, UE, (11) durchgeführt wird, das nahe einem Zellenrand einer bedienenden Zelle betrieben wird, wobei das Verfahren **dadurch gekennzeichnet, dass** ist, dass es umfasst:
Bestimmen (22), ob das UE einen Prioritätswert hat, der zur Nutzung eines Signalqualitätsschwellenwertparameters (12) definiert ist, der bei einem Wert eingestellt ist, der höher als ein Signalqualitätsübergabewert, a5, ist, der zum Einleiten einer Übergabe des UE an eine Nachbarzelle verwendet wird;
nach Bestimmen, dass das UE einen Prioritätswert hat, der zur Nutzung des Signalqualitätsschwellenwertparameters (12) definiert ist, Überwachen (24) von UE Signalqualitätsberichten um zu bestimmen, wann eine Signalqualität des UE in der bedienenden Zelle geringer ist als der Signalqualitätsschwellenwertparameter und größer als der Signalqualitätsübergabewert; und
Erzwingen (25) einer Übergabe des UE von der bedienenden Zelle an die Nachbarzelle in Antwort auf ein Bestimmen, dass die Signalqualität des UE geringer ist als der Signalqualitätsschwellenwertparameter (12) und größer als der Signalqualitätsübergabewert a5, wobei die UE Signalqualitätsberichte UE Kanalqualitätsangabe-, CQI, Berichte umfassen, die eine CQI, die das UE in der bedienenden Zelle erfährt, UEcqi, angeben, der Signalqualitätsschwellenwertparameter (12) einen CQI Schwellenwertparameter umfasst und der Signalqualitätsübergabewert einen CQI Übergabewert umfasst; und
nach Bestimmen, dass das UE keinen Prioritätswert hat, der zur Nutzung des CQI Schwellenwertparameters definiert ist:
Überwachen (23) von UE CQI Berichten um zu bestimmen, wann die UEcqi niedriger ist als der CQI Übergabewert; und
Übergeben (23) des UE an die Nachbarzelle in Antwort auf ein Bestimmen, dass die UEcqi niedriger ist als der CQI Übergabewert.

2. Verfahren nach Anspruch 1, wobei der Signalqualitätsschwellenwertparameter (12) im Sinne eines der folgenden definiert ist und die UE Signalqualitätsberichte ein entsprechendes der folgenden angeben, wie es das UE in der bedienenden Zelle erfährt:
Referenzsignalempfangsleistung, RSRP;
Referenzsignalempfangsqualität, RSRQ;
Signal/Rausch-Verhältnis, SNR; und
Signal/Rausch-plus-Interferenz-Verhältnis, SINR.

3. Verfahren nach Anspruch 1, wobei das Überwachen des UE CQI Berichte auch ein Überwachen der UE CQI Berichte enthält um zu bestimmen, ob eine UEcqi für die Nachbarzelle einen absoluten Schwellenwert übersteigt, wobei der eNodeB die Übergabe nur erzwingt, wenn:
die UEcqi für die bedienende Zelle niedriger ist als der CQI Schwellenwertparameter;
die UEcqi für die bedienende Zelle höher ist als der CQI Übergabewert; und
die UEcqi für die bedienende Zelle unter dem absoluten Schwellenwert ist und die UEcqi für die Nachbarzelle den absoluten Schwellenwert übersteigt.

4. Verfahren nach Anspruch 1, ferner umfassend ein Empfangen vom Betreibersystem von Informationen, die einen oder mehrere Prioritätswerte angeben, die zur Nutzung des CQI Schwellenwertparameters definiert sind, und einen Wert des CQI Schwellenwertparameters für jeden definierten Prioritätswert angeben.

5. Verfahren nach Anspruch 1, wobei das zelluläre Telekommunikationssystem ein Long Term Evolution, LTE, Zugangsnetzwerk umfasst und die bedienende Zelle und die Nachbarzelle entweder Interfrequenz-LTE-Nachbarzellen oder Intrafrequenz--LTE-Nachbarzellen sind.

6. eNodeB (31) eines zellulären Telekommunikationssystems, der zum Steuern einer Übergabe eines Benutzergeräts, UE, (11) konfiguriert ist, das nahe einem Zellenrand einer bedienenden Zelle betrieben wird, wobei der eNodeB **gekennzeichnet ist durch** einen Prozessor (32), der an einen Speicher (33) gekoppelt ist, der Rechnerprogrammanweisungen speichert, wobei, wenn der Prozessor die Rechnerprogrammanweisungen ausführt, der Prozessor den eNodeB veranlasst zum:
Bestimmen (22). ob das UE einen Prioritätswert hat, der zur Nutzung eines Signalqualitätsschwellenwertparameters (12) definiert ist, der bei einem Wert eingestellt ist, der höher als ein Signalqualitätsübergabewert, a5, ist, der zum Einleiten einer Übergabe des UE an eine Nachbarzelle verwendet wird;;
in Antwort auf ein Bestimmen, dass das UE einen Prioritätswert hat, der zur Nutzung des Signalqualitätsschwellenwertparameters definiert ist, Überwachen (24, 38) von UE Signalqualitätsberichten um zu bestimmen, wann eine Signalqualität des UE in der bedienenden Zelle geringer ist als der Signalqualitätsschwellenwertparameter und größer als der Signalqualitätsübergabewert; und
Erzwingen (25, 41) einer Übergabe des UE von der bedienenden Zelle an die Nachbarzelle in Antwort auf ein Bestimmen, dass die Signalqualität des UE geringer ist als der Signalqualitätsschwellenwertparameter (12) und größer als der Signalqualitätsübergabewert a5, wobei die UE Signalqualitätsberichte UE Kanalqualitätsangabe-, CQI, Berichte umfassen, die eine CQI, die das UE in der bedienenden Zelle erfährt, UEcqi, angeben, der Signalqualitätsschwellenwertparameter einen CQI Schwellenwertparameter umfasst und der Signalqualitätsübergabewert einen CQI Übergabewert umfasst,
wobei der eNodeB ferner konfiguriert ist, in Antwort auf ein Bestimmen, dass das UE keinen Prioritätswert hat, der zur Nutzung des CQI Schwellenwertparameters definiert ist, UE CQI Berichte zu überwachen um zu bestimmen, wann die UEcqi niedriger ist als der CQI Übergabewert;
wobei der eNodeB ferner konfiguriert ist, das UE, das keinen Prioritätswert hat, der zur Nutzung des CQI Schwellenwertparameters definiert ist, in Antwort auf ein Bestimmen, dass die UEcqi niedriger ist als der CQI Übergabewert zu übergeben.

7. eNodeB nach Anspruch 6, wobei der Signalqualitätsschwellenwertparameter (12) im Sinne eines der folgenden definiert ist und die UE Signalqualitätsberichte ein entsprechendes der folgenden angeben, wie es das UE in der bedienenden Zelle erfährt:
Referenzsignalempfangsleistung, RSRP;
Referenzsignalempfangsqualität, RSRQ;
Signal/Rausch-Verhältnis, SNR; und
Signal/Rausch-plus-Interferenz-Verhältnis, SINR.

8. eNodeB nach Anspruch 6, wobei der eNodeB ferner konfiguriert ist, die UE CQI Berichte zu überwachen um zu bestimmen, ob eine UEcqi für die Nachbarzelle einen absoluten Schwellenwert übersteigt, wobei der eNodeB die Übergabe nur erzwingt, wenn:
die UEcqi für die bedienende Zelle niedriger ist als der CQI Schwellenwertparameter;
die UEcqi für die bedienende Zelle höher ist als der CQI Übergabewert; und
die UEcqi für die bedienende Zelle unter dem absoluten Schwellenwert ist und die UEcqi für die Nachbarzelle den absoluten Schwellenwert übersteigt.

9. eNodeB nach Anspruch 6, ferner umfassend eine Schnittstelle (37), die konfiguriert ist, von einem Betreibersystem Informationen zu empfangen, die einen oder mehrere Prioritätswerte angeben, die zur Nutzung des CQI Schwellenwertparameters definiert sind, und einen Wert des CQI Schwellenwertparameters für jeden definierten Prioritätswert angeben.

10. eNodeB nach Anspruch 9, wobei die Prioritätswerts Dienstgüte-, QoS, Klassenkennungs-, QCI, Werte sind, die den UEs zugeordnet sind, die im zellulären Telekommunikationssystem betrieben werden.

11. eNodeB nach Anspruch 6 einem der Ansprüche 8 bis 10, wobei der Speicher konfiguriert ist, eine Kanalqualitätsangabe-, CQI, Schwellenwerttabelle (39) zu speichern, die einen CQI Übergabewert, a5, angibt, der zum Einleiten einer Übergabe des UE an eine Nachbarzelle verwendet wird, und einen CQI Schwellenwertparameter (12) mit einem Wert größer als der CQI Übergabewert hat; und wobei der eNodeB ferner umfasst:
eine Funkempfänger (35), der konfiguriert ist, vom UE (11) CQI Berichte zu empfangen, die eine CQI des UE, UEcqi, in der bedienenden Zelle berichten; und
einen Planer (34) mit einer Schnittstelle zu einem Betreibersystem, wobei der Planer (34) konfiguriert ist, unter der Steuerung des Prozessors (32) zum:
Empfangen von Informationen (37) vom Betreibersystem, die angeben, dass der Dienstgüte-, QoS, Klassenkennungs-, QCI, Wert des UE definiert ist, den CQI Schwellenwertparameter zu nutzen;
Anweisen einer Vergleichseinheit (38), die UEcqi mit den Schwellenwerten zu vergleichen, die in der Schwellenwerttabelle (39) gespeichert sind, um zu bestimmen, wann die UEcqi niedriger ist als der CQI Schwellenwertparameter (12) und größer als der CQI Übergabewert a5; und
Anweisen einer Zwangsübergabeeinheit (41), eine Übergabe des UE an die Nachbarzelle zu erzwingen, in Antwort auf eine Bestimmung durch die Vergleichseinheit (38), dass die UEcqi niedriger ist als der CQI Schwellenwertparameter (12) und größer als der CQI Übergabewert a5.

## Revendications

1. Procédé exécuté par un eNodeB (31) d'un système de télécommunication cellulaire permettant de commander un transfert intercellulaire d'un équipement d'utilisateur, UE, (11) fonctionnant à proximité d'un bord de cellule d'une cellule de desserte, le procédé étant **caractérisé en ce qu'**il comprend :
la détermination (22) si l'UE a un niveau de priorité défini pour utiliser un paramètre de seuil de qualité de signal (12) qui est réglé à un niveau supérieur à un niveau de transfert intercellulaire de qualité de signal, a5, utilisé pour lancer un transfert intercellulaire de l'UE à une cellule voisine ;
à la détermination que l'UE a un niveau de priorité défini pour utiliser le paramètre de seuil de qualité de signal (12), la surveillance (24) de rapports de qualité de signal d'UE pour déterminer quand une qualité de signal de l'UE dans la cellule de desserte est inférieure au paramètre de seuil de qualité de signal et supérieure au niveau de transfert intercellulaire de qualité de signal ; et
le forçage (25) d'un transfert intercellulaire de l'UE de la cellule de desserte à la cellule voisine en réponse à la détermination que la qualité de signal de l'UE est inférieure au paramètre de seuil de qualité de signal (12) et supérieure au niveau de transfert intercellulaire de qualité de signal a5, dans lequel les rapports de qualité de signal d'UE comprennent des rapports d'indication de qualité de canal, CQI, d'UE indiquant une CQI subie par l'UE, UEcqi, dans la cellule de desserte, le paramètre de seuil de qualité de signal (12) comprend un paramètre de seuil CQI, et le niveau de transfert intercellulaire de qualité de signal comprend un niveau de transfert intercellulaire CQI ; et
à la détermination que l'UE n'a pas un niveau de priorité défini pour utiliser le paramètre de seuil CQI :
la surveillance (23) de rapports CQI d'UE pour déterminer quand l'UEcqi est inférieure au niveau de transfert intercellulaire CQI ; et
le transfert intercellulaire (23) de l'UE à la cellule voisine en réponse à la détermination que l'UEcqi est inférieure au niveau de transfert intercellulaire CQI.

2. Procédé selon la revendication 1, dans lequel le paramètre de seuil de qualité de signal (12) est défini en termes de l'un de ce qui suit, et les rapports de qualité de signal d'UE indiquent l'un correspondant de ce qui suit subi par l'UE dans la cellule de desserte :
puissance de réception de signal de référence, RSRP ;
qualité de réception de signal de référence, RSRQ ;
rapport de signal sur bruit, SNR ; et
rapport de signal sur bruit plus interférence, SINR.

3. Procédé selon la revendication 1, dans lequel la surveillance des rapports CQI d'UE inclut également la surveillance des rapports CQI d'UE pour déterminer si une UEcqi pour la cellule voisine dépasse un seuil absolu, dans lequel l'eNodeB force le transfert intercellulaire uniquement lorsque :
l'UEcqi pour la cellule de desserte est inférieure au paramètre de seuil CQI ;
l'UEcqi pour la cellule de desserte est supérieure au niveau de transfert intercellulaire CQI ; et
l'UEcqi pour la cellule de desserte est inférieure au seuil absolu et l'UEcqi pour la cellule voisine dépasse le seuil absolu.

4. Procédé selon la revendication 1, comprenant en outre la réception, en provenance d'un système d'exploitation, d'informations indiquant un ou plusieurs niveaux de priorité définis pour utiliser le paramètre de seuil CQI, et indiquant une valeur du paramètre de seuil CQI pour chaque niveau de priorité défini.

5. Procédé selon la revendication 1, dans lequel le système de télécommunication cellulaire comprend un réseau d'accès d'évolution à long terme, LTE, et la cellule de desserte et la cellule voisine sont des cellules voisines LTE d'inter-fréquence ou des cellules voisines LTE d'intra-fréquence.

6. ENodeB (31) d'un système de télécommunication cellulaire configuré pour commander un transfert intercellulaire d'un équipement d'utilisateur, UE, (11) fonctionnant à proximité d'un bord de cellule d'une cellule de desserte, dans lequel l'eNodeB est **caractérisé par** un processeur (32) couplé à une mémoire (33) qui mémorise des instructions de programme informatique, dans lequel lorsque le processeur exécute les instructions de programme informatique, le processeur amène l'eNodeB à :
déterminer (22) si l'UE a un niveau de priorité défini pour utiliser un paramètre de seuil de qualité de signal (12) qui est réglé à un niveau supérieur à un niveau de transfert intercellulaire de qualité de signal, a5, utilisé pour lancer un transfert intercellulaire de l'UE à une cellule voisine ;
en réponse à la détermination que l'UE a un niveau de priorité défini pour utiliser le paramètre de seuil de qualité de signal, surveiller (24, 38) des rapports de qualité de signal d'UE pour déterminer quand une qualité de signal de l'UE dans la cellule de desserte est inférieure au paramètre de seuil de qualité de signal et supérieure au niveau de transfert intercellulaire de qualité de signal ; et
forcer (25, 41) un transfert intercellulaire de l'UE de la cellule de desserte à la cellule voisine en réponse à la détermination que la qualité de signal de l'UE est inférieure au paramètre de seuil de qualité de signal (12) et supérieure au niveau de transfert intercellulaire de qualité de signal a5, dans lequel les rapports de qualité de signal d'UE comprennent des rapports d'indication de qualité de canal, CQI, d'UE indiquant une CQI subie par l'UE, UEcqi, dans la cellule de desserte, le paramètre de seuil de qualité de signal comprend un paramètre de seuil CQI, et le niveau de transfert intercellulaire de qualité de signal comprend un niveau de transfert intercellulaire CQI,
dans lequel l'eNodeB est en outre configuré pour, en réponse à la détermination que l'UE n'a pas un niveau de priorité défini pour utiliser le paramètre de seuil CQI, surveiller des rapports CQI d'UE pour déterminer quand l'UEcqi est inférieure au niveau de transfert intercellulaire CQI ;
dans lequel l'eNodeB est en outre configuré pour effectuer le transfert intercellulaire de l'UE qui n'a pas un niveau de priorité défini pour utiliser le paramètre de seuil CQI en réponse à la détermination que l'UEcqi est inférieure au niveau de transfert intercellulaire CQI.

7. ENodeB selon la revendication 6, dans lequel le paramètre de seuil de qualité de signal (12) est défini en termes de l'un de ce qui suit, et les rapports de qualité de signal d'UE indiquent l'un correspondant de ce qui suit subi par l'UE dans la cellule de desserte :
puissance de réception de signal de référence, RSRP ;
qualité de réception de signal de référence, RSRQ ;
rapport de signal sur bruit, SNR ; et
rapport de signal sur bruit plus interférence, SINR.

8. ENodeB selon la revendication 6, dans lequel l'eNodeB est en outre configuré pour surveiller des rapports CQI d'UE pour déterminer si une UEcqi pour la cellule voisine dépasse un seuil absolu, dans lequel l'eNodeB force le transfert intercellulaire uniquement lorsque :
l'UEcqi pour la cellule de desserte est inférieure au paramètre de seuil CQI ;
l'UEcqi pour la cellule de desserte est supérieure au niveau de transfert intercellulaire CQI ; et
l'UEcqi pour la cellule de desserte est inférieure au seuil absolu et l'UEcqi pour la cellule voisine dépasse le seuil absolu.

9. ENodeB selon la revendication 6, comprenant en outre une interface (37) configurée pour recevoir, en provenance d'un système d'exploitation, des informations indiquant un ou plusieurs niveaux de priorité définis pour utiliser le paramètre de seuil CQI, et indiquant une valeur du paramètre de seuil CQI pour chaque niveau de priorité défini.

10. ENodeB selon la revendication 9, dans lequel les niveaux de priorité sont des niveaux d'identification de classe de qualité de service, QoS, QCI, assignés aux UE fonctionnant dans le système de télécommunication cellulaire.

11. ENodeB selon la revendication 6, ou l'une quelconque des revendications 8 à 10, dans lequel la mémoire est configurée pour mémoriser une table de seuils d'indication de qualité de canal, CQI, (39) indiquant un niveau de transfert intercellulaire CQI a5 utilisé pour lancer un transfert intercellulaire de l'UE à une cellule voisine, et un paramètre de seuil CQI (12) ayant un niveau supérieur au niveau de transfert intercellulaire CQI ; et dans lequel l'eNodeB comprend en outre :
un récepteur radio (35) configuré pour recevoir, en provenance de l'UE (11), des rapports CQI rapportant une CQI de l'UE, UEcqi, dans la cellule de desserte ; et
un programmateur (34) ayant une interface avec un système d'exploitation, dans lequel le programmateur (34) est configuré pour, sous le contrôle du processeur (32) :
recevoir des informations (37) en provenance du système d'exploitation indiquant que le niveau d'identification de classe de qualité de service, QoS, QCI, de l'UE est défini pour utiliser le paramètre de seuil CQI ;
ordonner à une unité de comparaison (38) de comparer l'UEcqi aux seuils mémorisés dans la table de seuils (39) pour déterminer quand l'UEcqi est inférieure au paramètre de seuil CQI (12) et supérieure au niveau de transfert intercellulaire CQI a5 ; et
ordonner à une unité de transfert intercellulaire forcé (41) de forcer un transfert intercellulaire de l'UE à la cellule voisine en réponse à la détermination par l'unité de comparaison (38) que l'UEcqi est inférieure au paramètre de seuil CQI (12) et supérieure au niveau de transfert intercellulaire CQI a5.
